# EUROPÄISCHE PATENTANMELDUNG

(11) **EP 2 803 956 A1**
(43) Veröffentlichungstag der Anmeldung: **19.11.2014**
(21) Anmeldenummer: 13167507.6
(22) Anmeldetag: 13.05.2013
(51) Int. Cl.: G01F 25/00

(54) **Servicemodul für ein Füllstandmessgerät und automatisiertes Serviceverfahren**

(71) Anmelder: VEGA Grieshaber KG, 77709 Wolfach (DE)
(72) Erfinder: Welle, Roland, 77756 Hausach (DE); Börsig, Jörg, 77776 Schapbach (DE); Hoferer, Christian, 77654 Offenburg (DE); Griessbaum, Karl, 77796 Mühlenbach (DE)
(74) Vertreter: Maiwald Patentanwalts GmbH

(57) **Zusammenfassung**

Die Erfindung betrifft ein Servicemodul für ein Füllstandmessgerät, welches nach Anschluss an das Füllstandmessgerät das Füllstandmessgerät, die vom Messgerät verwendete Betriebsprogrammversion und eine vom Füllstandmessgerät erzeugte Statusmeldung automatisch erkennen kann. Daraufhin bestimmt das Servicemodul auf Basis der Statusmeldung, welche Daten vom Füllstandmessgerät benötigt werden, um einen mit der Statusmeldung zusammenhängenden Status des Füllstandmessgeräts zu identifizieren. Diese Daten werden auf einer Datenspeichereinheit empfangen, die im Labor ausgewertet werden kann. Ein Servicetechniker vor Ort ist nicht erforderlich.

## Beschreibung

### Gebiet der Erfindung

Die Erfindung betrifft die Füllstandmesstechnik. Insbesondere betrifft die Erfindung ein Servicemodul für ein Füllstandmessgerät, ein Füllstandmessgerät mit einem Servicemodul, ein automatisiertes Serviceverfahren zur Diagnose eines mit einer von einem Füllstandmessgerät erzeugten Statusmeldung zusammenhängenden Status, ein Programmelement und ein computerlesbares Medium.

### Technischer Hintergrund

Tritt bei der Füllstandmessung eine Fehlfunktion des Füllstandmessgeräts auf, so ist es oft möglich, die Ursache des Fehlers durch Analyse der aufgezeichneten Messdaten, zukünftig von dem Füllstandmessgerät erfasster Messdaten oder anderer im Füllstandmessgerät gespeicherter Daten zu identifizieren. Hierfür schließt ein Servicetechniker typischerweise seinen Computer über eine drahtgebundene Schnittstelle an das Feldgerät an und beginnt dann, nach dem Fehler zu suchen. Diese Prozedur kann mehrere Tage lang dauern, bis die gewonnenen Daten eine genaue Identifikation des Fehlers zulassen.

Ist der Fehler dann diagnostiziert, kann der Servicetechniker beispielsweise eine neue Firmware auf das Füllstandmessgerät aufspielen, das Füllstandmessgerät mit einem neuen Parametersatz ausstatten (parametrieren) oder anderweitige Vorkehrungen treffen, um den Fehler zu beheben.

### Zusammenfassung der Erfindung

Es ist eine Aufgabe der Erfindung, den Service von Füllstandmessgeräten zu erleichtern.

Diese Aufgabe wird durch die Merkmale der unabhängigen Patentansprüche gelöst. Weiterbildungen der Erfindung ergeben sich aus den Unteransprüchen und der folgenden Beschreibung.

Gemäß einem ersten Aspekt der Erfindung ist ein Servicemodul für ein Füllstandmessgerät angegeben, welches eine Schnittstelle, einen Prozessor und eine Datenspeichereinheit aufweist. Die Schnittstelle ist zum Anschluss des Servicemoduls an eine entsprechende Schnittstelle einer Elektronikeinheit des Füllstandmessgeräts ausgeführt. Der Prozessor ist ausgeführt, nach dem Anschluss des Servicemoduls an die Elektronikeinheit das Füllstandmessgerät automatisch zu erkennen (zu identifizieren). Weiterhin ist der Prozessor ausgeführt, die von dem Füllstandmessgerät verwendete Betriebsprogrammversion sowie eine ggf. von dem Füllstandmessgerät erzeugte Statusmeldung automatisch zu erkennen. Bei dieser Statusmeldung kann es sich beispielsweise um eine Fehlermeldung handeln.

Weiterhin ist der Prozessor ausgeführt, auf Basis der Statusmeldung (z.B. der Fehlermeldung) automatisch zu bestimmen, welche Daten von dem Füllstandmessgerät benötigt werden, um einen mit der Statusmeldung zusammenhängenden Status (z.B. den mit der Fehlermeldung zusammenhängenden Fehler) des Füllstandmessgeräts zu identifizieren. Die Datenspeichereinheit ist zum Speichern der benötigten Daten ausgeführt, nachdem das Füllstandmessgerät diese benötigten Daten über die Schnittstelle des Servicemoduls an das Servicemodul übertragen hat.

In anderen Worten kann das Servicemodul ausgeführt sein, an die Elektronikeinheit des Füllstandmessgeräts angeschlossen zu werden und daraufhin vollautomatisch genau diejenigen Daten vom Füllstandmessgerät anzufordern, welche für die Identifikation und ggf. auch die Behebung einer Fehlfunktion des Füllstandmessgeräts dienen. Bei diesen Daten kann es sich beispielsweise um bereits im Füllstandmessgerät gespeicherte oder zukünftig aufgenommene Messdaten des Füllstandmessgeräts oder um anderweitige im Füllstandmessgerät gespeicherte Daten handeln.

Hierfür ist es erforderlich, dass der Prozessor so programmiert ist, dass das Servicemodul nach dessen Anschluss an das Füllstandmessgerät (respektive an die Elektronikeinheit des Füllstandmessgeräts) zunächst das Füllstandmessgerät eindeutig identifizieren kann. Auch muss der Prozessor erkennen können, was für eine Software auf dem Füllstandmessgerät läuft und welche Fehlermeldungen vom Füllstandmessgerät wann und in welchem Zusammenhang generiert wurden. Auf Basis dieses Wissens kann der Prozessor dann entscheiden, welche Daten benötigt werden, um eine genaue Fehleranalyse zu betreiben. Der Prozessor kann die Daten aktiv vom Füllstandmessgerät anfordern und/oder er wartet ab, bis die gewünschten Daten vom Füllstandmessgerät erzeugt sind und ruft sie dann ab. Auch kann das Servicemodul ausgeführt sein, bei bestimmten Fehlermeldungen einfach nur "mitzuhören", also zu überwachen, welche Schritte das Füllstandmessgerät zu welchen Zeitpunkten durchführt und welche Befehle und Daten erzeugt bzw. erfasst werden.

Sind die für die Fehlerdiagnose benötigten Daten im Servicemodul gespeichert, können sie ausgewertet werden, um den Fehler zu identifizieren und festzustellen, wie er behoben werden kann.

Gemäß einer Ausführungsform der Erfindung ist der Prozessor ausgeführt, das Füllstandmessgerät automatisch zur Übertragung der benötigten Daten zu veranlassen.

Gemäß einer weiteren Ausführungsform der Erfindung ist das Servicemodul und insbesondere dessen Prozessor ausgeführt zum automatischen Parametrieren des Füllstandmessgeräts nach dessen Anschluss an die Elektronikeinheit.

Diese Parametrierung kann beispielsweise dann erfolgen, wenn durch die Analyse der von dem Füllstandmessgerät an das Servicemodul übertragenen Daten die Fehlerursache identifiziert wurde. Die Identifikation der Fehlerursache kann direkt durch das Servicemodul erfolgen, falls das Servicemodul entsprechend programmiert ist oder es kann vorgesehen sein, dass die Datenspeichereinheit des Servicemoduls oder das gesamte Servicemodul an einen Wartungsservice übergeben wird, der dann die Datenanalyse vornimmt, um den Fehler zu identifizieren. In diesem Zuge kann der Wartungsservice den Prozessor wieder geeignet programmieren, um nach dem folgenden Anschluss des Servicemoduls an die Elektronikeinheit des Füllstandmessgeräts die Fehlerbehebung durchzuführen, beispielsweise in Form der automatischen Parametrierung des Füllstandmessgeräts.

Gemäß einer weiteren Ausführungsform der Erfindung ist das Servicemodul mit dem Prozessor zur automatischen Übertragung einer neuen Firmware an das Füllstandmessgerät nach dem Anschluss des Servicemoduls an die Elektronikeinheit ausgeführt.

Auch dieses kann beispielsweise nach dem wiederholten Anschluss des Servicemoduls an das Füllstandmessgerät erfolgen, nachdem die benötigten Daten übertragen und gespeichert und daraufhin ausgewertet wurden.

Gemäß einer weiteren Ausführungsform der Erfindung ist das Servicemodul ausgeführt zu bestimmen, zu welchem Zeitpunkt die Übertragung der benötigten Daten an das Servicemodul abgeschlossen ist. Auch dies kann durch eine geeignete Programmierung des Prozessors erfolgen.

Im Übrigen sei darauf hingewiesen, dass Teile oder das komplette von dem Prozessor durchzuführende Programm auf der Datenspeichereinheit gespeichert sein kann.

Gemäß einer weiteren Ausführungsform der Erfindung ist das Servicemodul zur Ausgabe eines akustischen oder optischen Signals nach beendeter Datenübertragung ausgeführt.

Nach Ausgabe des akustischen oder optischen Signals weiß dann ein Benutzer, dass das Servicemodul wieder vom Füllstandmessgerät abgenommen werden kann.

Gemäß einer weiteren Ausführungsform der Erfindung handelt es sich bei den benötigten Daten um Messdaten des Füllstandmessgeräts.

Gemäß einer weiteren Ausführungsform der Erfindung handelt es sich bei den benötigten Daten um auf dem Füllstandmessgerät gespeicherte Daten.

Gemäß einer weiteren Ausführungsform der Erfindung weist das Servicemodul weiterhin einen Energiespeicher auf, der über das Füllstandmessgerät ladbar ist. Gemäß einer weiteren Ausführungsform der Erfindung weist das Servicemodul eine weitere Schnittstelle auf, beispielsweise einen USB-Anschluss, um den Energiespeicher über eine externe Energiequelle zu laden. Dies kann dann vorteilhaft sein, wenn die Energieversorgung vom Füllstandmessgerät an das Servicemodul nicht ausreichend ist, um den Energiebedarf des Servicemoduls zu decken.

Gemäß einer weiteren Ausführungsform der Erfindung weist das Servicemodul ein Gehäuse mit einem runden Querschnitt zum Einsetzen in ein entsprechendes Gehäuse des Füllstandmessgeräts auf. Beispielsweise kann das Servicemodul aufgeschraubt werden.

Gemäß einem weiteren Aspekt der Erfindung ist ein Füllstandmessgerät mit einem oben und im Folgenden beschriebenen Servicemodul angegeben.

Gemäß einem weiteren Aspekt der Erfindung ist ein automatisiertes Serviceverfahren zur Diagnose eines mit einer von einem Füllstandmessgerät erzeugten Fehlermeldung zusammenhängenden Fehlers angegeben. Bei dem Verfahren erfolgt zunächst eine automatische Erkennung des Füllstandmessgeräts, der von dem Füllstandmessgerät verwendeten Betriebsprogrammversionen und / oder einer von dem Füllstandmessgerät erzeugten Fehlermeldung. Dies erfolgt beispielsweise, nachdem das das Verfahren durchführende Servicemodul an das Füllstandmessgerät angeschlossen worden ist.

Auf Basis der Fehlermeldung wird dann automatisch bestimmt, welche Daten von dem Füllstandmessgerät benötigt werden, um einen mit der Fehlermeldung zusammenhängenden Fehler des Füllstandmessgeräts zu identifizieren.

Daraufhin werden die benötigten Daten auf einer Datenspeichereinheit gespeichert, nachdem das Füllstandmessgerät diese über eine entsprechende Schnittstelle an das Servicemodul übertragen hat.

An dieser Stelle sei darauf hingewiesen, dass die oben und im Folgenden im Hinblick auf das Servicemodul beschriebenen Verfahrensschritte, die der Prozessor oder andere Bauteile des Servicemoduls durchführen, ebenso Teil des oben beschriebenen Verfahrens sein können.

Gemäß einem weiteren Aspekt der Erfindung ist ein Programmelement angegeben, welches, wenn es auf dem Prozessor eines Servicemoduls für ein Füllstandmessgerät ausgeführt wird, das Servicemodul dazu veranlasst, die oben und im Folgenden beschriebenen Verfahrensschritte durchzuführen.

Gemäß einem weiteren Aspekt der Erfindung ist ein computerlesbares Medium angegeben, auf dem ein Programmelement gespeichert ist, das, wenn es auf dem Prozessor eines Servicemoduls ausgeführt wird, das Servicemodul dazu veranlasst, die oben und im Folgenden beschriebenen Schritte durchzuführen.

Im Folgenden werden mit Verweis auf die Figuren Ausführungsbeispiele der Erfindung beschrieben.

Werden in der folgenden Figurenbeschreibung in unterschiedlichen Figuren gleiche Bezugszeichen verwendet, so bezeichnen diese gleiche oder ähnliche Elemente. Gleiche oder ähnliche Elemente können aber auch durch unterschiedliche Bezugszeichen bezeichnet sein.

### Kurze Beschreibung der Figuren

Fig. 1 zeigt ein Servicemodul für ein Füllstandmessgerät gemäß einem Ausführungsbeispiel der Erfindung in Draufsicht.
Fig. 2 zeigt die untere Seite eines Servicemoduls gemäß einem Ausführungsbeispiel der Erfindung.
Fig. 3 zeigt ein Füllstandmessgerät mit einem Servicemodul gemäß einem Ausführungsbeispiel der Erfindung.
Fig. 4 zeigt ein Füllstandmessgerät mit einem daran angeschlossenen Servicemodul gemäß einem Ausführungsbeispiel der Erfindung.
Fig. 5 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

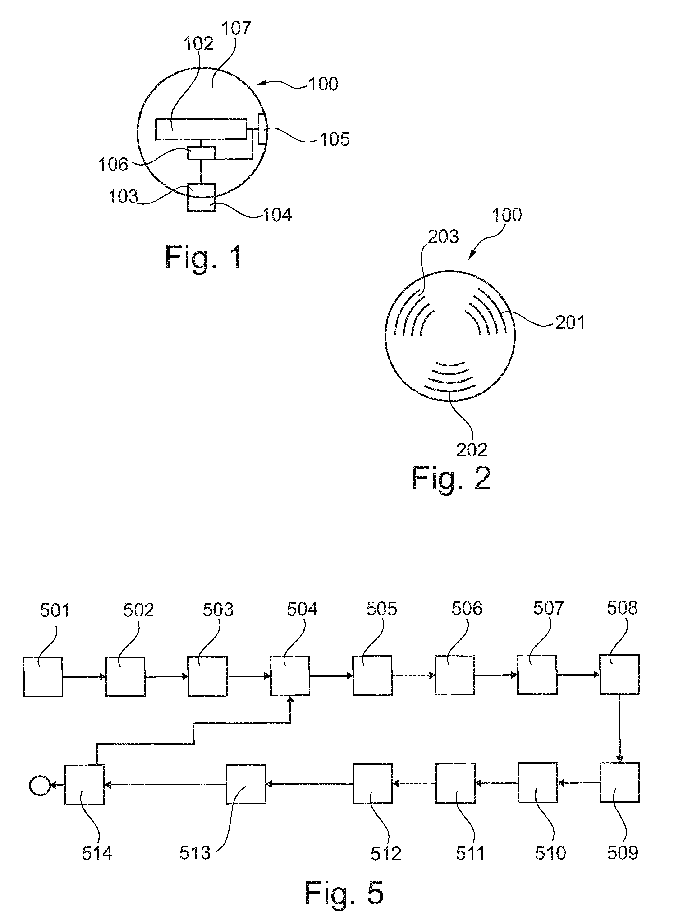

Fig. 1 zeigt ein Servicemodul 100 für ein Füllstandmessgerät gemäß einem Ausführungsbeispiel der Erfindung. Das Servicemodul 100 weist einen runden Querschnitt auf und kann beispielsweise auf das Füllstandmessgerät aufgeschraubt oder aufgesetzt werden, so wie dies für ein Anzeigemodul der Baureihe PLICSCOM der Firma VEGA vorgesehen ist.

Das Servicemodul 100 weist ein Gehäuse 107 mit kreisrundem Querschnitt auf. Im Inneren des Gehäuses befindet sich ein Prozessor 106, der zur Energieversorgung an einen Energiespeicher 102 angeschlossen ist. Auch ist der Prozessor 106 an eine externe Geräteschnittstelle 105 angeschlossen, beispielsweise eine USB-Schnittstelle, über welche er ebenfalls mit Energie versorgt werden kann. Es kann vorgesehen sein, dass der Energiespeicher 102 über die externe Schnittstelle 105 geladen werden kann.

Weiterhin ist der Prozessor an eine zweite Schnittstelle 103 angeschlossen, in die eine Datenspeichereinheit 104 eingesteckt werden kann. Hierbei handelt es sich beispielsweise um eine Speicherkarte. Auf dieser Karte sind Anweisungen an den Prozessor bzw. Daten für den Prozessor gespeichert, die der Prozessor bei Bedarf abrufen kann. Insbesondere kann der Prozessor auf der Datenspeichereinheit 104 Daten speichern, die er vom Füllstandmessgerät erhält.

Fig. 2 zeigt die Rückseite eines Servicemoduls gemäß einem Ausführungsbeispiel der Erfindung. Die Rückseite des Servicemoduls der Fig. 2 weist beispielsweise drei oder vier Schnittstellengruppen 201, 202, 203 auf, welche beispielsweise in Form von Schleifkontakten ausgeführt sind. Wird das Servicemodul auf das Füllstandmessgerät aufgeschraubt oder aufgesetzt, wird eine der drei Gruppen von Schleifkontakten an die entsprechende Geräteschnittstelle des Füllstandmessgeräts angeschlossen. Jede dieser Gruppen von Kontakten 201, 202, 203 ist mit dem Prozessor 106 verbunden und dient dazu, den Prozessor an die Elektronikeinheit des Füllstandmessgeräts anzuschließen.

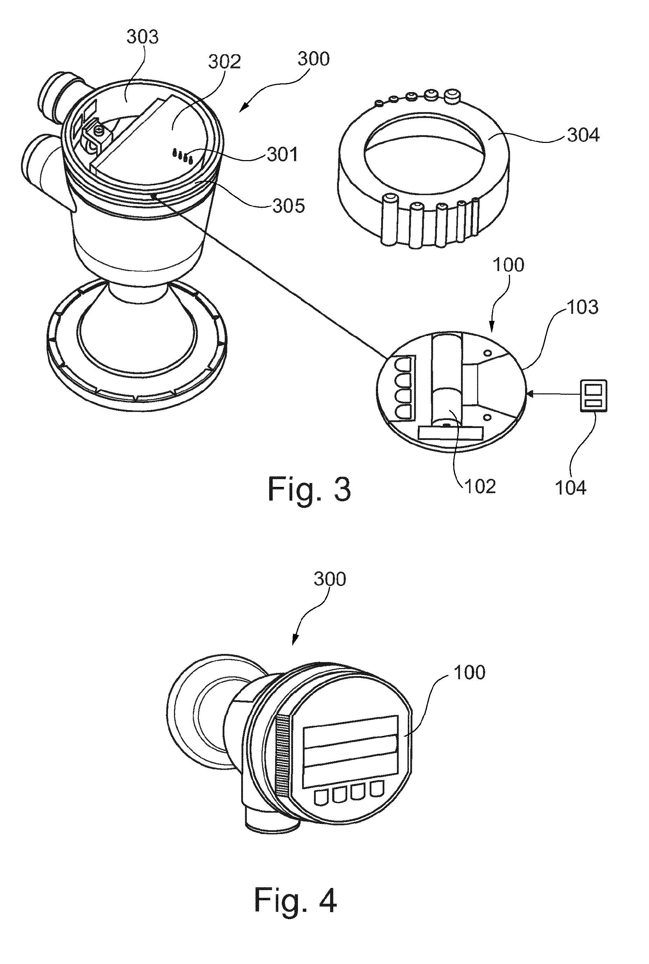

Fig. 3 zeigt ein Füllstandmessgerät 300, beispielsweise ein Füllstandradar. Das Füllstandmessgerät weist ein Gehäuse 303 auf, auf welches das Servicemodul 100 aufgeschraubt oder in welches das Servicemodul 100 eingesetzt werden kann. Wird das Servicemodul eingesetzt, kann ein Gehäusedeckel 304 ohne oder wie dargestellt mit Sichtfenster vorgesehen sein, der nach dem Einsetzen des Servicemoduls in das Füllstandmessgerät auf das externe Gewinde 305 des Füllstandmessgeräts aufgeschraubt wird, um das Servicemodul vor äußeren Einflüssen zu schützen. Das Servicemodul mag durch einen geeigneten Verriegelungsmechanismus mechanisch fest mit der Elektronikeinheit (302) verbunden sein.

Es sind vier Kontaktstifte 301 vorgesehen, welche dazu dienen, die Schnittstelle des Servicemoduls (siehe Schleifkontakte 201, 202, 203 der Fig. 2) elektrisch zu kontaktieren, wenn das Servicemodul auf das Füllstandmessgerät aufgesetzt wird. Die Kontaktstifte 301 sind an die Elektronikeinheit 302 des Füllstandmessgeräts angeschlossen.

Auch ist in Fig. 3 ersichtlich, wie die Datenspeichereinheit 104 in die Schnittstelle 103 des Servicemoduls eingeschoben werden kann.

Fig. 4 zeigt das Füllstandmessgerät der Fig. 3 mit aufgesetztem Servicemodul, aber ohne Gehäusedeckel 304.

Fig. 5 zeigt das Flussdiagramm eines Verfahrens gemäß einem Ausführungsbeispiel der Erfindung. In Schritt 501 gibt das Füllstandmessgerät eine Fehlermeldung aus, woraufhin in Schritt 502 die Servicezentrale automatisch oder manuell vom Betreiber des Füllstandmessgeräts verständigt wird. In Schritt 503 übergibt die Servicezentrale ein Servicemodul an den Betreiber des Füllstandmessgeräts, welcher das Servicemodul in Schritt 504 an die Elektronikeinheit des Füllstandmessgeräts anschließt. In Schritt 505 wird das Servicemodul mit Energie vom Füllstandmessgerät versorgt und in Schritt 506 startet das Serviceprogramm des Prozessors des Servicemoduls. Zunächst erkennt hierdurch der Prozessor automatisch das Füllstandmessgerät, die vom Füllstandmessgerät verwendete Betriebsprogrammversion und die von dem Füllstandmessgerät erzeugte/erzeugten Fehlermeldung/Fehlermeldungen.

In Schritt 507 bestimmt der Prozessor auf Basis der Fehlermeldung/der Fehlermeldungen automatisch, welche Daten von dem Füllstandmessgerät benötigt werden, um einen mit der Fehlermeldung zusammenhängenden Fehler des Füllstandmessgeräts zu identifizieren.

In Schritt 508 ruft der Prozessor die Daten beim Füllstandmessgerät ab bzw. wartet, bis das Füllstandmessgerät die entsprechenden Daten an das Servicemodul übermittelt hat und speichert diese Daten auf eine Datenspeichereinheit des Servicemoduls.

In Schritt 509 wird ein Signal vom Servicemodul abgesetzt, welches signalisiert, dass sämtliche notwendigen Daten auf der Datenspeichereinheit gespeichert sind. Daraufhin wird das komplette Servicemodul oder die Datenspeichereinheit abgenommen und an die Servicezentrale geschickt, welche in Schritt 511 die Daten ausliest und eine Fehlerdiagnose/Fehleridentifikation vornimmt.

In Schritt 512 spielt die Servicezentrale neue Daten auf die Datenspeichereinheit und schickt die Datenspeichereinheit an den Betreiber des Füllstandmessgeräts zurück. In Schritt 513 wird das Servicemodul mit der neu beschriebenen Datenspeichereinheit wieder an das Füllstandmessgerät angeschlossen, woraufhin in Schritt 514 ein Fehlerbehebungsprogramm automatisch auf dem Prozessor des Servicemoduls gestartet wird und die zur Behebung des Fehlers des Füllstandmessgeräts notwendigen Daten werden dann automatisch vom Servicemodul auf das Füllstandmessgerät übertragen. Hierbei kann es sich um Parametrierungsdaten und/oder Firmwaredaten handeln.

Ist der Fehler noch nicht behoben oder stellt sich eine neue Fehlermeldung ein, kann das Verfahren noch einmal bei Schritt 504 starten.

Das Servicemodul kann demnach während des laufenden Betriebs des Füllstandmessgeräts alle Daten sammeln, die zur Bildung der Messgröße nötig sind und speichert diese Daten auf beispielsweise einer handelsüblichen SD-Speicherkarte. Die Rekonstruktion des Sensorverhaltens während der kontinuierlichen Füllstandmessung ist dadurch an anderer Stelle (z. B. im Labor, d. h. in der Servicezentrale) möglich.

Der Betrieb des Füllstandsensors wird durch die Aufzeichnung nicht gestört.

Das Servicemodul verfügt über eine neue Art an Energiekonzept. Zum Speichern der Daten auf eine SD-Karte sind Stromspitzen von bis zu 60 mA möglich. Als Energiespeicher steht dafür ein Akku zur Verfügung. Der Akku selbst wird durch den Sensor mit einem konstanten Stromwert gespeist. Dieser Strom stünde ansonsten einem Anzeigemodul (beispielsweise PLICSCOM) zur Verfügung. Der Ladestrom ist bei einem 4...20 mA-Messgerät abhängig vom Schleifenstrom. Die Energiebilanz des Servicemoduls ist durch die unter Umständen sehr schnelle Datenfolge, also die hohe Leistung des Prozessors, unter Umständen negativ. Dies bedeutet, dass der Akku vorab geladen wird, um ein möglichst langes Aufzeichnen zu realisieren.

Das Servicemodul weist beispielsweise die geometrischen Maße des PLICSCOM auf. Es fügt sich daher in das Plattformkonzept der VEGA-Sensoren ein.

An dieser Stelle sei darauf hingewiesen, dass das Servicemodul insbesondere für Messgeräte ausgeführt sein kann, die an eine 4...20 mA-Messschleife angeschlossen sind.

Ein möglicher Service-Einsatz kann wie folgt ablaufen: Ein Kunde meldet ein Problem mit einem Sensor und bekommt darauf ein Servicemodul zugesandt, mit welchem die Sensordaten ausgelesen und gespeichert werden. Anschließend schickt der Kunde das Servicemodul oder auch nur den Datenspeicher, z.B. die SD-Karte, oder nur die auf dem Datenspeicher befindlichen Daten zurück zur Servicezentrale, wo die Daten ausgewertet und darauf basierend eine Lösung zur Fehlerbehebung erarbeitet wird. Die neue Parametrierung oder Software-Version für den Füllstandsensor wird in dem Servicemodul gespeichert und dem Kunden das Servicemodul oder die Speicherkarte mit den darauf gespeicherten Daten zurückgesandt. Sobald das Servicemodul mit dem zu parametrierenden Sensor wieder verbunden ist (dies erkennt das Servicemodul beispielsweise an der Seriennummer des Sensors) führt es die in der Servicezentrale definierten Schritte durch (beispielsweise Software-Update, Parameter schreiben).

Die Parametrierung des Servicemoduls selbst erfolgt beispielsweise mittels der Speicherkarte, auf welcher auch die Sensordaten gespeichert werden.

Ein Vorteil der Erfindung kann darin gesehen werden, dass keine kabelgebundene Aufzeichnung z. B. durch einen PC durchgeführt werden muss. Einwirkungen durch EMV-Störungen, die bei Leitungen auftreten können, werden somit verhindert. Die eigentliche Füllstandmessung wird durch die Aufzeichnung nicht behindert.

Als besondere Ausführungsform ist zudem ein Daten-Anschluss (z. B. USB-Anschluss) möglich. Er kann einerseits als reine Kommunikationsschnittstelle für die Kommunikation zwischen Feldgerät und einer externen Bedieneinheit (z.B. PC mit entsprechender Bediensoftware oder Handbediengerät, Smartphone und dergleichen) vorgesehen sein und andererseits die Parametrierbarkeit des Servicemoduls selbst gewährleisten. Darüber hinaus bietet je nach Spezifikation (beispielsweise USB-Anschluss) des Daten-Anschlusses, also der externen Schnittstelle des Servicemoduls, der Datenanschluss selbst die Möglichkeit zur Ladung des Energiespeichers des Servicemoduls.

Ergänzend sei daraufhingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Servicemodul (100) für ein Füllstandmessgerät (300), aufweisend:
eine Schnittstelle (201, 202, 203) zum Anschluss des Servicemoduls an eine Elektronikeinheit (302) des Füllstandmessgeräts;
einen Prozessor (106), der nach dem Anschluss des Servicemoduls an die Elektronikeinheit zur automatischen Erkennung des Füllstandmessgeräts, der von dem Füllstandmessgerät verwendeten Betriebsprogrammversion und einer von dem Füllstandmessgerät erzeugten Statusmeldung ausgeführt ist;
wobei der Prozessor weiterhin ausgeführt ist, auf Basis der Statusmeldung automatisch zu bestimmen, welche Daten von dem Füllstandmessgerät benötigt werden, um einen mit der Statusmeldung zusammenhängenden Status des Füllstandmessgeräts zu identifizieren;
eine Datenspeichereinheit (104) zum Speichern der benötigten Daten, nachdem das Füllstandmessgerät diese über die Schnittstelle an das Servicemodul übertragen hat.

2. Servicemodul nach Anspruch 1,
wobei der Prozessor (106) ausgeführt ist, das Füllstandmessgerät (300) automatisch zur Übertragung der benötigten Daten zu veranlassen.

3. Servicemodul nach einem der vorhergehenden Ansprüche,
ausgeführt zum automatischen Parametrieren des Füllstandmessgeräts (300) nach dem Anschluss des Servicemoduls (100) an die Elektronikeinheit (302).

4. Servicemodul nach einem der vorhergehenden Ansprüche,
ausgeführt zum automatischen Übertragen einer neuen Firmware an das Füllstandmessgerät (300) nach dem Anschluss des Servicemoduls (100) an die Elektronikeinheit (302).

5. Servicemodul nach einem der vorhergehenden Ansprüche,
ausgeführt zum Bestimmen, zu welchem Zeitpunkt die Übertragung der benötigten Daten an das Servicemodul (100) abgeschlossen ist.

6. Servicemodul nach Anspruch 5,
wobei das Servicemodul (100) zur Ausgabe eines akustischen oder optischen Signals nach beendeter Datenübertragung ausgeführt ist.

7. Servicemodul nach einem der vorhergehenden Ansprüche,
wobei es sich bei den benötigten Daten um Messdaten des Füllstandmessgeräts (300) handelt.

8. Servicemodul nach einem der vorhergehenden Ansprüche,
wobei es sich bei den benötigten Daten um auf dem Füllstandmessgerät (300) gespeicherte Daten handelt.

9. Servicemodul nach einem der vorhergehenden Ansprüche, aufweisend:
einen Energiespeicher (102), der über das Füllstandmessgerät (300) ladbar ist.

10. Servicemodul nach Anspruch 9, aufweisend:
einen USB-Anschluss (105) zum Laden des Energiespeichers (102).

11. Servicemodul nach einem der vorhergehenden Ansprüche, aufweisend:
ein Gehäuse (107) mit einem runden Querschnitt zum Einsetzen in ein Gehäuse (303) des Füllstandmessgeräts (300).

12. Füllstandmessgerät (300) mit einem Servicemodul (100) nach einem der vorhergehenden Ansprüche.

13. Automatisiertes Serviceverfahren zur Diagnose eines mit einer von einem Feldgerät erzeugten Statusmeldung zusammenhängenden Status des Feldgeräts, aufweisend die Schritte:
automatisches Erkennen des Feldgeräts, der von dem Feldgerät verwendeten Betriebsprogrammversion und einer von dem Feldgerät erzeugten Statusmeldung;
automatisches Bestimmen auf Basis der Statusmeldung, welche Daten von dem Feldgerät benötigt werden, um eine mit der Statusmeldung zusammenhängenden Funktion des Feldgeräts zu identifizieren;
Speichern der benötigten Daten, nachdem das Feldgerät diese über die Schnittstelle an das Servicemodul übertragen hat.

14. Programmelement, das, wenn es auf dem Prozessor eines Feldgeräts ausgeführt wird, das Feldgerät anleitet, die folgenden Schritte durchzuführen:
automatisches Erkennen des Feldgeräts, der von dem Feldgerät verwendeten Betriebsprogrammversion und einer von dem Feldgerät erzeugten Statusmeldung;
automatisches Bestimmen auf Basis der Statusmeldung, welche Daten von dem Feldgerät benötigt werden, um eine mit der Statusmeldung zusammenhängende Funktion des Feldgeräts zu identifizieren;
Speichern der benötigten Daten, nachdem das Feldgerät diese über die Schnittstelle an das Servicemodul übertragen hat.

15. Computerlesbares Medium, auf dem ein Programmelement gespeichert ist, das, wenn es auf dem Prozessor eines Feldgeräts ausgeführt wird, das Feldgerät anleitet, die folgenden Schritte durchzuführen:
automatisches Erkennen des Feldgeräts, der von dem Feldgerät verwendeten Betriebsprogrammversion und einer von dem Feldgerät erzeugten Statusmeldung;
automatisches Bestimmen auf Basis der Statusmeldung, welche Daten von dem Feldgerät benötigt werden, um eine mit der Statusmeldung zusammenhängende Funktion des Feldgeräts zu identifizieren;
Speichern der benötigten Daten, nachdem das Feldgerät diese über die Schnittstelle an das Servicemodul übertragen hat.
